# EUROPÄISCHE PATENTSCHRIFT

(11) **EP 0 895 016 B1**
(45) Veröffentlichungstag und Bekanntmachung des Hinweises auf die Patenterteilung: **09.04.2003**
(21) Anmeldenummer: 98109224.0
(22) Anmeldetag: 20.05.1998
(51) Int. Cl.: F16M 11/12

(54) **Kamerahalter zur Befestigung an einem Schwenkkopf**
Camera holding device to fasten to a rotatable head
Support de fixation de caméra à une tête rotative

(30) Priorität: 28.07.1997 DE 29713427 U
(43) Veröffentlichungstag der Anmeldung: 03.02.1999
(73) Patentinhaber: Rüther, Chris, 65183 Wiesbaden (DE)
(72) Erfinder: Rüther, Chris, 65183 Wiesbaden (DE)
(74) Vertreter: Kirschner, Klaus Dieter, Dipl.-Phys.

(56) Entgegenhaltungen:
- EP-A- 0 122 241
- DE-A- 3 406 582
- DE-B- 1 167 545
- DE-U- 29 713 427
- FR-E- 80 183
- GB-A- 1 125 736
- US-A- 4 341 452

## Beschreibung

Die Erfindung betrifft einen Kamerahalter zur Befestigung an einem Schwenkkopf, nach dem Oberbegriff des Hauptanspruches.

Ein derartiger Kamerahalter ist aus der GB-A-1 125 736 bekannt und ist fest mit dem Schwenkkopf eines Stativs verbunden. Die den Kamerahalter bildenden Teile dieser Anordnung sind derart gefertigt, daß sie für verschiedene Anwendungen, die eine flexible Montage erfordern, nicht geeignet sind. Ferner ist der bekannte Kamerahalter nur im Festverbund mit einem Schwenkkopf vorgesehen.

Aus der US-A-4 341 452 ist ein Kamerahalter bekannt, bei dem die Kamera um drei Achsen schwenkbar ist. Der Kamerahalter umfaßt zwei Bügel, die ineinander liegend schwenkbar miteinander verbunden sind. Die Kamera ist an dem innen liegenden Bügel schwenkbar gelagert.

Aus der DE-A-3 406 582 ist eine Haltevorrichtung bekannt, die eine Stützplatte, eine mit der Stützplatte verbundene Montageplatte, einer an der Montageplatte verschiebbar und verschwenkbar befestigte Aufnahmeplatte und eine damit verbundenen Halteplatte aufweist, wobei die Stützplatte und die Montageplatte einerseits und die Aufnahmeplatte und die Halteplatte andererseits im wesentlichen rechtwinklig zueinander angeordnet und einstückig fest miteinander verbunden sind. Die Haltevorrichtung ist für die Halterung von Bürogeräten bestimmt.

Aufgabe der vorliegenden Erfindung ist es, einen Kamerahalter zur Befestigung an einem Schwenkkopf, insbesondere einem Stativ-Schwenkkopf, bereitzustellen, der vielseitig montierbar ist und es erlaubt, Kameras unterschiedlicher Größe in unterschiedlichen Positionen einzusetzen, sodass sich ein großer Anwendungsbereich im bildgestalterischen Spektrum abdecken läßt.

Zur Lösung dieser Aufgabe ist der erfindungsgemäße Kamerahalter zur Befestigung an einem Schwenkkopf in der in dem Hauptanspruch angegebenen Weise gekennzeichnet.

Mit dem Kamerahalter gemäß der Erfindung läßt sich ein großer Anwendungsbereich im bildgestalterischen Spektrum abdecken. Der Kamerahalter gemäß der Erfindung ist auf beliebigen Schwenkköpfen montierbar. Mit der Kombination Schwenkkopf/Kamerahalter sind dann alle erforderlichen Schwenkbewegungen, insbesondere ein Schwenk um 360° um die X-Achse, ein Schwenk um 160° um die Y-Achse und ein Schwenk um 360° um die Z-Achse möglich. Beispielsweise kann beim "Dutchen" die Kamera auf der Halteplatte in die optische Achse gebracht werden, indem die beiden Winkel in geeigneter Weise gegeneinander verschoben werden. Der Kamerahalter gemäß der Erfindung läßt sich an jedem beliebigen Hydro-Schwenkkopf montieren, wenn die Keilplatte des jeweiligen Schwenkkopfes aufgeschraubt ist. Auf dem Kamerahalter gemäß der Erfindung können Kameras von broadcastfähigen Videokameras bis zu allen 16 mm und 35 mm Kameras montiert werden.

Der erfindungsgemäße Kamerahalter kann mit seiner Stützplatte beliebig an einem Schwenkkopf befestigt werden. Die Montageplatte, Aufnahmeplatte und Halteplatte lassen sich in unterschiedlichen Positionen an der Stützplatte befestigen. Damit ist der Kamerahalter vielseitig und zur Kamerahalterung in vielen verschiedenen Positionen geeignet. Die verschiedenen Positionen lassen sich durch unterschiedliche Befestigung von Montageplatte, Aufnahmeplatte und Halteplatte erzielen.

Vorzugsweise sind die Stützplatte und die Montageplatte und/oder die Aufnahmeplatte und die Halteplatte endseitig lösbar miteinander verbunden sind. Durch diese Ausgestaltung der Kamerahalters wird somit ein montagetechnisch vorteilhaftes Winkelelement gebildet, und durch die Lösbarkeit lassen sich unterschiedliche Befestigungspositionen der Montageplatte verwirklichen. Zusätzlich läßt sich die Positionierung von Aufnahmeplatte relativ zur Halteplatte variieren. Die Befestigung kann gleichsinnig zur Befestigung von Stützplatte und Montageplatte eingerichtet werden. Sie kann auch entgegengesetzt dazu vorgenommen werden.

Die Platten haben bevorzugt rechteckige Form, wobei Stützplatte und Halteplatte unterschiedlich lang sind, jedoch gleich dimensionierte Befestigungsmittel, beispielsweise Bohrungen zur Aufnahme von Montageschrauben, zur Befestigung an der Montageplatte beziehungsweise der Aufnahmeplatte. Dadurch lassen sich Stützplatte und Halteplatte gegeneinander austauschen, was die Vielseitigkeit der Montage erhöht und Zubehör einspart.

Weiterhin ist bevorzugt, daß die Montageplatte und die Aufnahmeplatte an beiden Schmalseiten Befestigungsbohrungen zur Befestigung der Stützplatte beziehungsweise der Halteplatte aufweisen, wodurch die Vielseitigkeit der Anordnung noch erhöht wird.

In der Montageplatte ist bevorzugt ein Langloch gebildet, in dem die Dämpfungseinheit zu verankern ist, die mit der Aufnahmeplatte verbunden ist. Die Dämpfungseinheit (Getriebe) dient einerseits zur Befestigung der Aufnahmeplatte an der Montageplatte und andererseits zum Verschwenken der beiden Platten relativ zueinander. Eine Dämpfungseinheit ist an sich aus der DE 3 629 866 C2 bei Kamera-Stativköpfen bekannt.

Vorzugsweise hat die Dämpfungseinheit einen Kopf, der das Langloch auf seiner der Aufnahmeplatte abgewandten Seite übergreift und an seinem freien Ende eine Einstelleinrichtung zur Einstellung der Dämpfung hat. Mit dieser Anordnung läßt sich die Aufnahmeplatte und die Halteplatte bequem gegenüber der Montageplatte in der erforderlichen Position einstellen und die gewünschte Dämpfung für die Schwenkbewegung der Kamera über die Dämpfungseinheit wählen.

An dem Kopf sind bevorzugt Rastzapfen befestigt, die zum Eingriff in Bohrungen bestimmt sind, welche auf der Montageplatte gebildet sind. Dadurch läßt sich durch Eingriff der Rastzapfen in den Bohrungen der Kopf sicher arretieren.

Die Bohrungen sind bevorzugt längs der Längsseiten des Langlochs gebildet. Dadurch läßt sich der Verstellknopf so dimensionieren, daß er die Weite des Langlochs nur wenig überschreitet.

Vorzugsweise hat die Aufnahmeplatte Montageschlitze, an denen die Dämpfungseinheit mit Schrauben zu befestigen ist.

Die Platten sind bevorzugt aus Aluminium gebildet, wodurch Gewicht gespart wird.

Ausführungsbeispiele der Erfindung werden anhand der beiliegenden Zeichnungen beschrieben. Es zeigen:
- Figur 1: eine schematische perspektivische Draufsicht auf den Kamerahalter von hinten;
- Figur 2: eine schematische perspektivische Draufsicht auf den Kamerahalter von vorne; und
- Figuren 3A bis 3C: schematische Darstellungen verschiedener Möglichkeiten des Zusammenbaus des erfindungsgemäßen Kamerahalters.

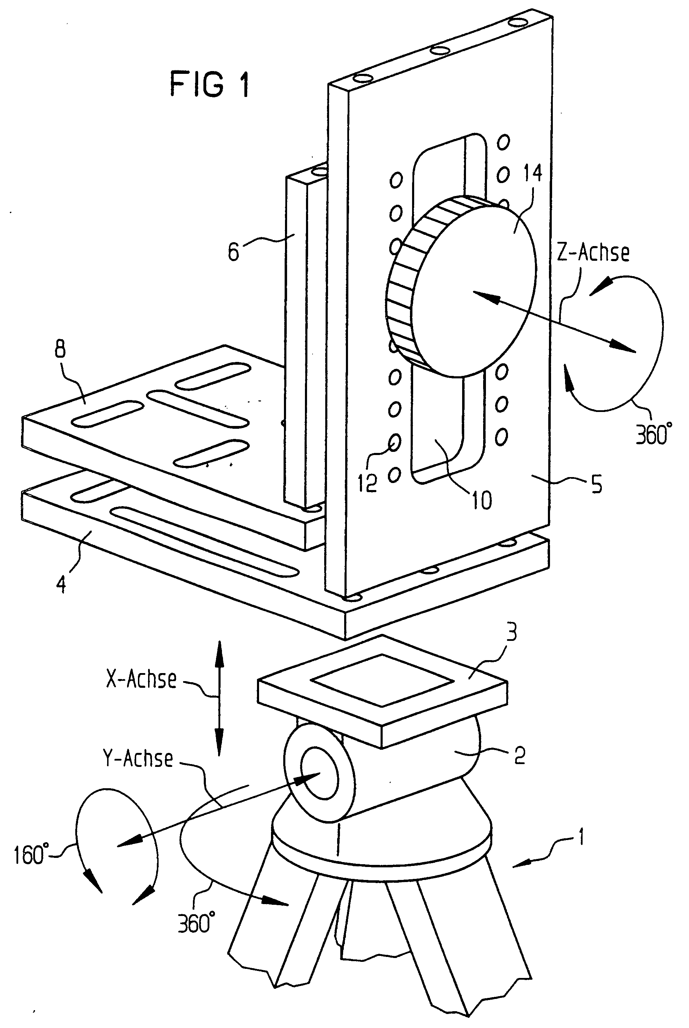

In Figur 1 ist schematisch ein Stativ 1 mit Schwenkkopf 2 gezeigt. Der Kamerahalter ist zur Befestigung an einer Keilplatte 3 des Schwenkkopfs 2 bestimmt. Der Kamerahalter weist eine rechteckige Stützplatte 4 aus Aluminium auf, die Befestigungsschlitze und Befestigungsbohrungen enthält. Die Stützplatte 4 ist zur Befestigung auf der Keilplatte 3 bestimmt. An der Stützplatte 4 ist im rechten Winkel eine Montageplatte 5 angeschraubt, und zwar in der Weise, daß die beiden Platten endseitig aneinandergrenzen. Die Montageplatte 5 ist ebenfalls rechteckig und aus Aluminium gefertigt. Sie besitzt längs ihrer längeren Kanten ein Langloch 10. Entlang des Langlochs 10 sind Bohrungen 12 in der Montageplatte 5 gebildet.

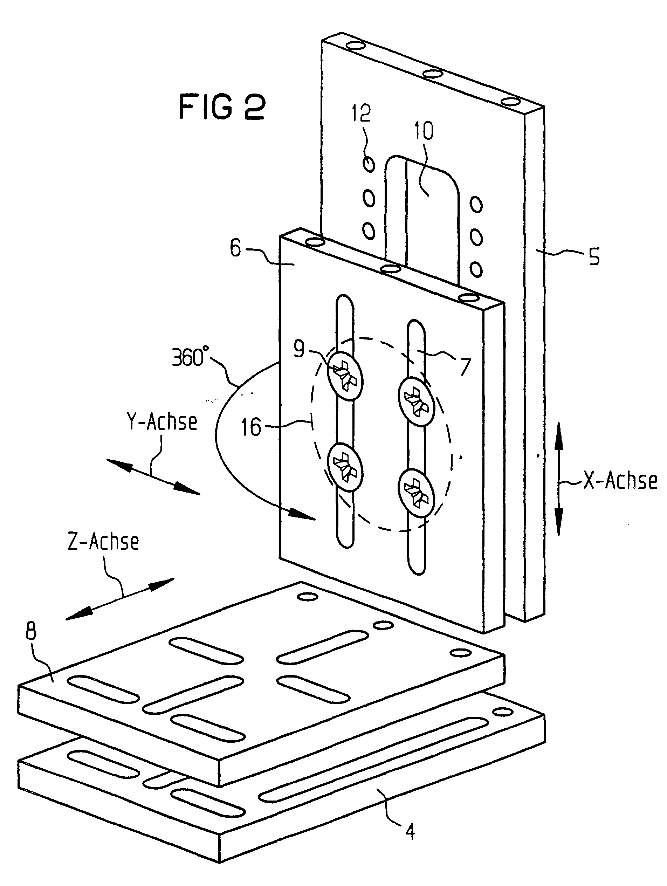

Wie besser in Figur 2 zu erkennen ist, ist die Montageplatte 5 mit einer rechteckigen Aufnahmeplatte 6 verbunden. Die Aufnahmeplatte 6 hat Montageschlitze 7, an denen eine Dämpfungseinheit 16 (in Figur 2 in gestrichelten Linien dargestellt) mit Schrauben 9 zu befestigen ist. Die Dämpfungseinheit weist einen Kopf 14 (Figur 1) auf, mit dem sie an der Montageplatte verankert ist. Der Dämpfungsgrad der Dämpfungseinheit 16 ist mit einer Einstelleinrichtung einstellbar, die an dem Kopf 14 angeordnet ist.

An der Aufnahmeplatte 6 ist endseitig und im rechten Winkel eine Halteplatte 8 angeschraubt, die zur Halterung der Kamera dient und ebenfalls rechteckig ausgestaltet ist. Sie besteht aus Aluminium und enthält Schlitze und Bohrungen für Befestigungszwecke.

Bei der Anordnung der Figuren 1 und 2 kann die Kamera mit ihrer Längsachse (Achse durch das Objektiv) entlang der Y-Achse oder zum sogenannten "Dutchen" entlang der Z-Achse (Figur 2) montiert sein. Beim "Dutchen" kann die Kamera auf der Halteplatte in die optische Achse gebracht werden, indem die beiden Winkel in geeigneter Weise gegeneinander verschoben werden.

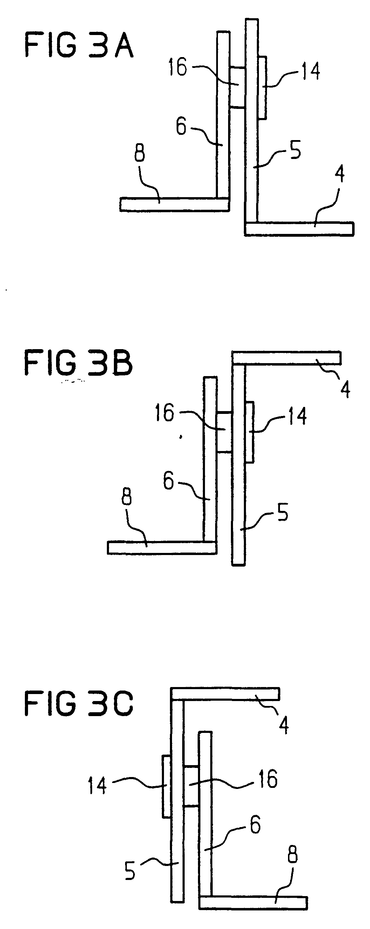

Die bei den Figuren 1 und 2 beschriebenen Positionen des Kamerahalters sind nur Beispiele. Die Aufnahmeplatte 6 kann auch an der entgegengesetzten Seite der Montageplatte 5 befestigt werden, so daß die Halteplatte 8 von der Stützplatte 4 weg zeigt (Figur 3A). Ferner läßt sich die Stützplatte 4 auch an einem Schwenkkopf hängend befestigen, und die Aufnahmeplatte 6 kann an der Montageplatte 5 so befestigt werden, daß die Halteplatte 8 von der Stützplatte 4 weg zeigt (Figur 3B). Schließlich kann man die Stützplatte 4 auch an einem Schwenkkopf hängend befestigen, und die Aufnahmeplatte 6 kann an der Montageplatte 5 so befestigt werden, daß die Halteplatte 8 unter die Stützplatte 4 zu liegen kommt (Figur 3C). Bei den verschiedenen Positionen ist darauf zu achten, daß die Dämpfungseinheit 16 so montiert wird, daß ihr Kopf zugänglich ist. Damit der Kamerahalter in diesen verschiedenen Positionen montierbar ist, haben die Montageplatte 5 und die Aufnahmeplatte 6 an beiden Schmalseiten Befestigungsbohrungen zur Befestigung der Stützplatte 4 beziehungsweise der Halteplatte 8. Die verschiedenen Befestigungspositionen von Stützplatte relativ zur Montageplatte, von Montageplatte relativ zur Aufnahmeplatte und von der Aufnahmeplatte relativ zur Halteplatte gewährleisten eine große Vielseitigkeit und machen den Kamerahalter gemäß der Erfindung für den Einsatz in schwierigen Betriebsstellungen für besondere Kamerapositionen geeignet.

Der Kopf 14 weist an seiner Unterseite Rastzapfen auf, die zum Eingriff in den Bohrungen 12 bestimmt sind. Dadurch läßt sich der Kopf 14 in unterschiedlichen Höhenpositionen der Aufnahmeplatte 6 gegenüber der Montageplatte 5 montieren.

## Patentansprüche

1. Kamerahalter zur Befestigung an einem Schwenkkopf, insbesondere einem Stativ-Schwenkkopf, mit einer an dem Schwenkkopf befestigbaren Stützplatte (4), einer mit der Stützplatte (4) verbundenen Montageplatte (5), einer an der Montageplatte (5) gegenüber dieser verschiebbar und mittels einer Dämpfungseinheit (16) verschwenkbar befestigten Aufnahmeplatte (6) und einer damit verbundenen Haltplatte (8) für die Kamera, wobei die Stützplatte (4) und die Montageplatte (5) einerseits und die Aufnahmeplatte (6) und die Halteplatte (8) andererseits im wesentlichen rechtwinklig zueinander angeordnet sind, **dadurch gekennzeichnet, dass** die Dämpfungseinheit (16) verschiebbar gegenüber der Aufnahmeplatte (6) an dieser befestigt ist.

2. Kamerahalter nach Anspruch 1, **dadurch gekennzeichnet, daß** die Platten (4, 5, 6, 8) rechteckige Form haben, wobei die Stützplatte (4) und die Halteplatte (8) unterschiedlich lang sind, jedoch gleich dimensionierte Befestigungsmittel zur Befestigung an der Montageplatte (5) beziehungsweise der Aufnahmeplatte (6) aufweisen.

3. Kamerahalter nach Anspruch 1 oder 2, **dadurch gekennzeichnet, daß** die Stützplatte (4) und die Montageplatte (5) und/oder die Aufnahmeplatte (6) und die Halteplatte (8) endseitig lösbar miteinander verbunden sind.

4. Kamerahalter nach Anspruch 3, **dadurch gekennzeichnet, daß** die Montageplatte (5) und die Aufnahmeplatte (6) an beiden Schmalseiten Befestigungsbohrungen zur Befestigung der Stützplatte (4) beziehungsweise der Halteplatte (8) aufweisen.

5. Kamerahalter nach einem der Ansprüche vorhergehenden Ansprüche, **dadurch gekennzeichnet, daß** in der Montageplatte (5) ein Langloch (10) angeordnet ist, in dem die Dämpfungseinheit (16) verankert ist, die andererseits mit der Aufnahmeplatte (6) verbunden ist.

6. Kamerahalter nach Anspruch 5, **dadurch gekennzeichnet, daß** an der Dämpfungseinheit (16) ein Kopf (14) angeordnet ist, der das Langloch (10) auf seiner der Aufnahmeplatte (6) abgewandten Seite übergreift und an dem Rastzapfen befestigt sind, die zum Eingriff in Bohrungen (12) bestimmt sind, die auf der Montageplatte (5) gebildet sind.

7. Kamerahalter nach Anspruch 6, **dadurch gekennzeichnet, daß** die Bohrungen (12) längs der Längskanten des Langlochs (10) gebildet sind.

8. Kamerahalter nach Anspruch 6, **dadurch gekennzeichnet, daß** an dem freien Ende des Kopfes (14) eine Einstelleinrichtung zur Einstellung der Dämpfung vorgesehen ist.

9. Kamerahalter nach Anspruch 1, **dadurch gekennzeichnet, daß** die Aufnahmeplatte (6) Montageschlitze (7) hat, an denen die Dämpfungseinheit (16) mit Schrauben (9) zu befestigen ist.

10. Kamerahalter nach einem der vorhergehenden Ansprüche, **dadurch gekennzeichnet, daß** die Platten (4, 5, 6, 8) aus Aluminium gebildet sind.

## Claims

1. Camera holder for attachment to a tilt head, more particularly the tilt head of a camera support, comprising a bearer plate (4) adapted to be attached to the tilt head, a mounting plate (5) connected with the bearer plate (4), a receiving plate (6) attached to the mounting plate in a sliding manner and in a pivotal manner by means of a damping unit (16) and connected therewith a holding plate (8) for the camera, where the bearer plate (4) and the mounting plate (5), on the one hand, and the receiving plate (6) and the holding plate (8), on the other hand, are arranged substantially rectangular to each other **characterized in that** the damping unit (16) is connected to the receiving plate (6) slidably with respect thereto.

2. Camera holder as claimed in claim 1, **characterized in that** the plates (4,5,6,8) have a rectangular shape, where the bearer plate (4) and the holding plate (8) are different in length but comprise equally dimensioned fastening means for connection to the mounting plate (5) or the receiving plate (6) respectively.

3. Camera holder as claimed in claim 1 or 2, **characterized in that** the bearer plate (4) and the mounting plate (5) and/or the receiving plate (6) and the holding plate (8) are detachably connected together at ends thereof.

4. Camera holder as claimed in claim 3, **characterized in that** on both narrow sides thereof the mounting plate (5) and the receiving plate (6) have attachment holes for attachment of the bearer plate (4) and, respectively, the holding plate (8).

5. Camera holder as claimed in any of the preceding claims, **characterized in that**, in the mounting plate (5), a slot (10) is provided within which the damping unit (16) is anchored which is connected at another end thereof with the receiving plate (6).

6. Camera holder as claimed in claim 5, **characterized in that**, on the damping unit (16), a head (14) is arranged which fits over the slot (10) at its side facing away from the receiving plate (6) and having detent pins secured thereto for fitting into holes (12) which are formed in the mounting plate (5).

7. Camera holder as claimed in claim 9, **characterized in that** holes (12) are formed along longitudinal edges of the slot (10).

8. Camera holder as claimed in claim 9, **characterized in that** a setting means for setting the damping effect is provided on a free end of the head (14).

9. Camera holder as claimed in claim 9, **characterized in that** the receiving plate (6) has mounting slots (7) to which slots the damping unit (16) is to be attached by means of screws (9).

10. Camera holder as claimed in any of the preceding claims, **characterized in that** the plates (4,5,6,8) are manufactured of aluminum.

## Revendications

1. Support de caméra pour être fixée à une tête pivotante, notamment une tête pivotante à trépied avec un plateau de support (4), une plaque de montage reliée au plateau de support (4), une plaque de réception (6) fixée à la plaque de montage (5) susceptible d'être déplacée par rapport à ladite plaque de montage et pouvant être pivoté au moyen d'une unité d'amortissement (16) et une plaque de maintien (8) ainsi reliée pour la caméra, où la plaque de support (4) et la plaque de montage (5), d'une part et la plaque de réception (6) ainsi que la plaque de maintien (8), d'autre part, sont disposées en grande partie à angle droit l'une par rapport à l'autre, **caractérisé en ce que** l'unité d' amortissement (16) est fixée à la plaque de réception de manière à pouvoir se déplacer par rapport à la plaque de réception (6).

2. Support de caméra selon la revendication 1, **caractérisé en ce que** les plaques (4, 5, 6, 8) ont des formes à angles droits ; le plateau de support (4) et la plaque de maintien (8) ayant différentes longueurs mais présentant cependant des moyens de fixations aux dimensions égales pour la fixation à la plaque de montage (5), notamment à la plaque de réception (6).

3. Support de caméra selon la revendication 1 ou 2, **caractérisé en ce que** la plaque de support (4) et la plaque de montage (5) et / ou la plaque de réception ainsi que la plaque de maintien (8) sont reliées entre elles aux extrémités terminales de façon détachable.

4. Support de caméra selon la revendication 3, **caractérisé en ce que** la plaque de montage (5) et la plaque de réception présentent sur les deux cotés étroits, des alésages de fixation pour fixer la plaque de support (4), notamment la plaque de maintien (8).

5. Support de caméra selon une des revendications précédentes, **caractérisé en ce que** le trou oblong (10) est disposé dans la plaque de montage (5) dans lequel trou est ancré l'unité d'amortissement qui est reliée par ailleurs à la plaque de réception (6).

6. Support de caméra selon la revendication 5, **caractérisé en ce qu'**une tête (14) est disposée sur l'unité d'amortissement (16) qui chevauche le trou oblong (10) sur le coté détourné de la plaque de réception (6) et sur laquelle tête sont fixées des tiges à encliquetage, qui sont destinées à être introduites dans des alésages (12) formés sur la plaque de montage (5).

7. Support de caméra selon la revendication 6, **caractérisé en ce que** les alésages (12) sont formés le long des bords longitudinaux du trou oblong (10).

8. Support de caméra selon la revendication 6, **caractérisé en ce que** sur l'extrémité libre dela tête (14), on a prévu un dispositif de réglage pour régler l'amortissement.

9. Support de caméra selon la revendication 1, **caractérisé en ce que** la plaque de réception (6) a des fentes de montage (7) auxquelles il est prévu de fixer l'unité d'amortissement (16) avec des vis (9).

10. Support de caméra selon une des revendications précédentes, **caractérisé en ce que** les plaques (4, 5, 6, 8) sont formées en aluminium.
